# EUROPEAN PATENT APPLICATION

(11) **EP 4 826 061 A1**
(43) Date of publication of application: **21.10.2026**
(21) Application number: 24904289.6
(22) Date of filing: 13.12.2024
(51) Int. Cl.: C22C 38/04, C22C 38/46, C22C 38/06, C22C 38/14, C22C 38/02, C22C 38/00, C22C 38/48, C22C 38/50, C22C 38/44, C22C 38/42

(54) **NICKEL-PLATED STEEL SHEET FOR CANS AND MANUFACTURING METHOD THEREOF**

(30) Priority: 15.12.2023 KR 20230182696
(71) Applicant: POSCO Co., Ltd, Gyeongsangbuk-do 37859 (KR)
(72) Inventor: Jo, Minho, Pohang-si, Gyeongsangbuk-do 37859 (KR); Jeon, Jeachun, Pohang-si, Gyeongsangbuk-do 37859 (KR)
(74) Representative: Meissner Bolte Partnerschaft mbB
(86) International application number: PCT/KR2024/020329
(87) International publication number: WO 2025/127724

(57) **Abstract**

A Ni plated steel sheet for cans according to an embodiment of the present invention comprises a base steel sheet, a Ni plating layer located on one or both surfaces of the base steel sheet, and an Fe-Ni alloy layer located between the base steel sheet and the Ni plating layer, wherein the base steel sheet comprises, in wt%, C: 0.02 to 0.07%, Mn: 0.1 to 0.4%, Al: 0.01 to 0.06%, and Ti: 0.02 to 0.06%, and the balance of Fe and other unavoidable impurities, an ASTM grain size number is 11.3 or more, a tensile strength is 420 MPa or more, an elongation is 20% or more, an in-plane anisotropy Δr is 0.4 or less, and a thickness of the Fe-Ni alloy layer is 0.5 to 2.5 µm.

## Description

### [Technical Field]

An embodiment of the present invention relates to a nickel plated steel sheet for cans and a manufacturing method thereof. Specifically, an embodiment of the present invention relates to a nickel plated steel sheet having excellent strength and workability, which is used for a cylindrical battery case for an electric vehicle and the like, and a manufacturing method thereof.

### [Background Art]

In the case of a cylindrical battery can used for a cylindrical battery case, it is common to use a steel sheet by performing nickel (Ni) plating or the like in order to withstand corrosion caused by an electrolyte contained in a battery. Recently, as the demand for electric vehicles increases, the demand for a material for a cylindrical battery case for an electric vehicle is significantly increasing.

Meanwhile, in order to ensure battery safety, the demand for strength among the characteristics of a battery can material is increasing. In an electric vehicle battery, an abnormal chemical reaction may occur internally due to various reasons such as overcurrent during driving or external impact, and a large amount of gas may be generated. The generated gas increases the internal pressure and can even lead to a chain explosion of the battery, so high strength is required for the battery can material to increase the internal pressure resistance of the battery. Furthermore, when a high-strength material is used, the performance of the battery can be further improved by reducing the thickness of the battery can and expanding the internal space. A battery can is manufactured through mechanical processing in which the thickness is reduced by 30% or more, and even if materials have the same yield strength, a material having high tensile strength has a high work hardening rate and thus can have higher durability after processing. Therefore, a high tensile strength is particularly required for a material for a battery can in order to obtain high strength after forming.

The material for a battery can is required to have mechanical properties in terms of workability as well. Since the cylindrical battery can undergoes processing steps such as drawing and ironing during forming, elongation of a certain level or more is required in addition to strength. Further, the smaller the in-plane anisotropy Δr is, the more advantageous it is in order to minimize the occurrence of an earing phenomenon during forming into a cylindrical shape. When the in-plane anisotropy is large, not only the earing occurring portion to be cut and removed after processing becomes large, but also thickness variations occur by region, making it difficult to fully utilize the internal space. In addition to the mechanical properties, the microstructure also affects workability, and as the crystal grains are smaller, an excellent processing shape due to uniform deformation can be obtained. When the crystal grains are coarse, not only shape distortion but also an orange peel phenomenon in which the surface becomes uneven may be caused by non-uniform deformation.

A cylindrical battery case is generally subjected to Ni plating to prevent corrosion caused by the internal electrolyte or the atmosphere during processing, and there are characteristics required for the plating layer as well. Ni plating is performed on a portion in contact with a processing die, and in order to prevent the plating layer from falling off during processing, adhesion is improved through heat treatment for forming an Fe-Ni alloy layer at an interface through diffusion between Fe of the steel sheet and Ni of the plating layer. When the thickness of the alloy layer is too thin, it is difficult to ensure adhesion between the steel sheet and the plating layer, and when it is too thick, the Fe component is exposed to the surface of the plating layer and rust may occur due to oxidation of Fe, so it is necessary to form an alloy layer of an appropriate thickness.

In order to manufacture a high-strength steel sheet for cans, a method of performing secondary rolling of a high reduction ratio on low-carbon steel has been proposed. Since secondary reduction is performed after recrystallization annealing, an advantage that strength is greatly improved by work hardening can be obtained. However, at such a high level of secondary reduction, the elongation significantly decreases, and thus there is a disadvantage in that it is difficult to ensure can workability.

Further, in order to ensure strength and workability, a method of utilizing bake hardening by adding appropriate amounts of P and Nb to ultra-low carbon steel is known. However, since it is an ultra-low carbon steel, although the C content is low, there is a disadvantage in that the contents of C and Nb must be controlled very strictly at the same time so that some C remains in solid solution without precipitating NbC so as to cause bake hardening.

Further, a method has been proposed in which the strength is improved by solid solution strengthening by adding a large amount of N of 130 ppm or more to low-carbon steel, and the elongation can be increased by applying a relatively small secondary reduction ratio. However, when a large amount of N, which is an interstitial element, is added, composition variation can easily occur, and when composition variation occurs, there is a high possibility that material property variation also occurs. Therefore, there is a disadvantage that additional efforts are required in the steelmaking process to control the composition variation to be low.

Further, a method has been described in which strength is improved by using precipitation strengthening through the addition of Ti, and reduction in elongation due to work hardening is reduced by additionally applying a secondary reduction ratio of 15% or less to ensure a balance between strength and ductility. However, the increase in strength due to work hardening leads to a decrease in elongation, so there is a problem in that it is difficult to ensure workability.

### [Disclosure]

### [Technical Problem]

An embodiment of the present invention provides a nickel plated steel sheet for cans and a manufacturing method thereof. Specifically, an embodiment of the present invention provides a nickel plated steel sheet having excellent strength and workability, which is used for a cylindrical battery case for an electric vehicle and the like, and a manufacturing method thereof.

### [Technical Solution]

A Ni plated steel sheet for cans according to an embodiment of the present invention comprises a base steel sheet, a Ni plating layer located on one or both surfaces of the base steel sheet, and an Fe-Ni alloy layer located between the base steel sheet and the Ni plating layer, wherein the base steel sheet comprises, in wt%, C: 0.02 to 0.07%, Mn: 0.1 to 0.4%, Al: 0.01 to 0.06%, and Ti: 0.02 to 0.06%, and the balance of Fe and other unavoidable impurities, an ASTM grain size number is 11.3 or more, a tensile strength is 420 MPa or more, an elongation is 20% or more, an in-plane anisotropy Δr is 0.4 or less, and a thickness of the Fe-Ni alloy layer is 0.5 to 2.5 µm.

The base steel sheet may further comprise at least one of Si: 0.05 wt% or less, P: 0.015 wt% or less, S: 0.015 wt% or less, and N: 0.006 wt% or less.

The base steel sheet may further comprise at least one of Nb: 0.01 wt% or less, Ni: 0.1 wt% or less, Cr: 0.1 wt% or less, Cu: 0.1 wt% or less, Mo: 0.01 wt% or less and V: 0.01 wt% or less.

The base steel sheet comprises TiC precipitates, and an average particle diameter of the TiC precipitates may be 1 nm or more and 1 µm or less.

A method of manufacturing a Ni plated steel sheet for cans according to an embodiment of the present invention comprises: manufacturing a hot-rolled steel sheet by hot-rolling a slab comprising, in wt%, C: 0.02 to 0.07%, Mn: 0.1 to 0.4%, Al: 0.01 to 0.06%, and Ti: 0.02 to 0.06%, and the balance of Fe and other unavoidable impurities; manufacturing a cold-rolled steel sheet by cold-rolling the hot-rolled steel sheet at a reduction ratio of 70 to 90%; recrystallization annealing the cold-rolled steel sheet at a soaking temperature of 720 to 850°C; temper rolling the recrystallization-annealed steel sheet at a reduction ratio of 0.5 to 1.8%; manufacturing a Ni plated steel sheet by performing Ni plating on one or both surfaces of the temper-rolled steel sheet; and alloying-annealing by maintaining the Ni plated steel sheet at a soaking temperature of 600 to 740°C for 5 to 60 seconds.

The slab may further comprise at least one of Si: 0.05 wt% or less, P: 0.015 wt% or less, S: 0.015 wt% or less, and N: 0.006 wt% or less.

The slab may further comprise at least one of Nb: 0.01 wt% or less, Ni: 0.1 wt% or less, Cr: 0.1 wt% or less, Cu: 0.1 wt% or less, Mo: 0.01 wt% or less and V: 0.01 wt% or less.

Before manufacturing the hot-rolled steel sheet, a step of heating the slab at 1200°C or higher may be further included.

In the manufacturing of the hot-rolled steel sheet, after hot finish rolling at Ar₃ or higher, coiling may be performed at a temperature of 580 to 720°C.

### [Advantageous Effects]

A Ni plated steel sheet for cans according to an embodiment of the present invention has excellent durability and workability and thus can be useful for a cylindrical battery case.

### [Brief Description of the Drawings]

FIG. 1 is a schematic cross-sectional view of a Ni plated steel sheet for cans according to an embodiment of the present invention.

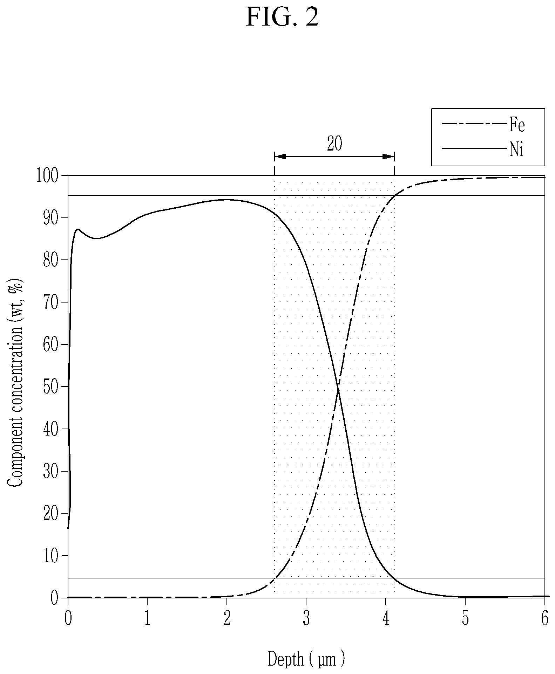

FIG. 2 is a GDS analysis result of the Ni plated steel sheet manufactured in Example 2.

### [Mode for Invention]

Terms such as first, second, and third are used to describe various parts, components, regions, layers and/or sections, but are not limited thereto. These terms are used only to distinguish one part, component, region, layer or section from another part, component, region, layer or section. Accordingly, a first part, component, region, layer or section described below may be referred to as a second part, component, region, layer or section without departing from the scope of the present invention.

Terminology used herein is only for referring to specific embodiments and is not intended to limit the present invention. Singular forms used herein include plural forms unless the phrases clearly indicate the opposite meaning. The meaning of "comprising" used in the specification specifies a specific characteristic, region, integer, step, operation, element and/or component, and does not exclude the existence or addition of other characteristics, regions, integers, steps, operations, elements and/or components.

Also, unless otherwise specified, % means weight %, and 1 ppm is 0.0001 weight %.

In an embodiment of the present invention, the meaning of further including an additional element means including the additional element by replacing the balance iron (Fe) by the added amount of the additional element.

Although not otherwise defined, all terms including technical terms and scientific terms used herein have the same meaning as commonly understood by one of ordinary skill in the art to which the present invention belongs. Terms defined in a commonly used dictionary are further interpreted as having a meaning consistent with the related technical literature and the currently disclosed content, and are not interpreted in an ideal or very formal sense unless defined.

Hereinafter, embodiments of the present invention will be described in detail so that those skilled in the art to which the present invention belongs can easily carry them out. However, the present invention may be implemented in various different forms and is not limited to the embodiments described herein.

An embodiment of the present invention relates to a Ni plated steel sheet used for an electric vehicle battery case and the like after can forming, and a material for such a purpose is required to have a strength of a certain level or more for improving the pressure resistance of a battery. In order to ensure workability, elongation of a certain level or more is required, and in order to obtain a normal shape, in-plane anisotropy and crystal grain size of a certain level or less are required. Further, for the Ni plating layer, corrosion resistance for preventing corrosion and adhesion for preventing falling off during processing should be secured at a certain level or more.

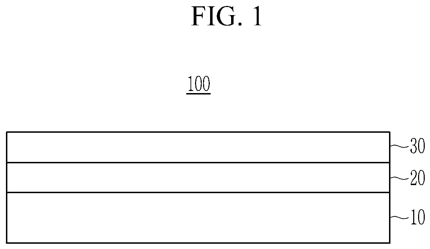

FIG. 1 schematically shows a cross-section of a Ni plated steel sheet 100 for cans according to an embodiment of the present invention. As shown in FIG. 1, the Ni plated steel sheet 100 for cans comprises a base steel sheet 10, a Ni plating layer 30 located on one or both surfaces of the base steel sheet 10, and an Fe-Ni alloy layer 20 located between the base steel sheet 10 and the Ni plating layer 30. Although FIG. 1 shows that the Fe-Ni alloy layer 20 and the Ni plating layer 30 are located on one surface of the base steel sheet 10, it is also possible that the Fe-Ni alloy layer 20 and the Ni plating layer 30 are located on both surfaces of the base steel sheet 10.

The base steel sheet 10 of the Ni plated steel sheet 100 for cans according to an embodiment of the present invention comprises, in wt%, C: 0.02 to 0.07%, Mn: 0.1 to 0.4%, Al: 0.01 to 0.06%, and Ti: 0.02 to 0.06%, and the balance of Fe and other unavoidable impurities.

Hereinafter, each component will be described in detail.

### Carbon (C): 0.020 to 0.070 wt%

C is an element added to improve the strength of the steel sheet, and when the content is low, the strength is low, so it may be difficult to use as a structural material. Further, when the content is too small, the productivity may decrease because the load of the steelmaking process increases. Conversely, when the C content is higher than necessary, workability may be reduced by lowering elongation. More specifically, C may be included in an amount of 0.030 to 0.065 wt%. More specifically, C may be included in an amount of 0.040 to 0.063 wt%.

In an embodiment of the present invention, some of C combines with a small amount of added Ti to exist in the form of fine TiC precipitates, and fine TiC can contribute to effective strength improvement by preventing crystal grains from excessively growing.

### Manganese (Mn): 0.10 to 0.40 wt%

Mn is an element that prevents hot shortness due to solid-solution S by combining with solid-solution S in steel and precipitating as MnS. Further, it is dissolved in steel and has an effect of increasing the strength of steel along with C. However, the strength improvement effect is lower than that of Ti, and when Mn is contained too much, the workability of the steel may decrease. More specifically, Mn may be included in an amount of 0.13 to 0.30 wt%. More specifically, Mn may be included in an amount of 0.14 to 0.25 wt%.

### Aluminum (Al): 0.010 to 0.060 wt%

Al is an element with a very large deoxidation effect and prevents formability from being lowered by solid-solution N by reacting with N in steel to precipitate AlN. However, when added in a large amount, the effect of additional addition may decrease. More specifically, Al may be included in an amount of 0.015 to 0.055 wt%. More specifically, Al may be included in an amount of 0.020 to 0.050 wt%.

### Titanium (Ti): 0.020 to 0.060 wt%

Ti can combine with C and be precipitated in the form of stable and fine TiC. Fine TiC precipitates suppress grain growth and effectively hinder dislocation movement, thereby contributing to strength improvement. When Ti is too small, it is difficult to expect a sufficient strength increasing effect by TiC. When Ti is added too much, ductility decreases, which not only hinders workability but also easily causes nozzle clogging during continuous casting. More specifically, Ti may be included in an amount of 0.022 to 0.050 wt%. More specifically, Ti may be included in an amount of 0.023 to 0.045 wt%.

The base steel sheet 10 may further comprise at least one of Si: 0.05 wt% or less, P: 0.015 wt% or less, S: 0.015 wt% or less, and N: 0.006 wt% or less.

### Silicon (Si): 0.050 wt% or less

Si is an element that can be used as a decarburizing agent and can contribute to improvement of strength by solid solution strengthening, so it is difficult to completely exclude it. However, when it is excessive, Si-based oxides are generated on the surface during annealing, causing defects during plating and thereby reducing plateability. Accordingly, in consideration of this, Si may be included in an amount of 0.05 wt% or less. More specifically, 0.001 to 0.050 wt% may be further included. More specifically, 0.005 to 0.035 wt% may be further included.

### Phosphorus (P): 0.015 wt% or less

The addition of P in a certain amount or less is an element that can increase strength without significantly reducing the ductility of steel, but if P is added too much, it segregates to grain boundaries, excessively hardening the steel and decreasing elongation. Accordingly, P may be further included in an amount of 0.015 wt% or less. More specifically, 0.001 to 0.015 wt% may be further included. More specifically, 0.003 to 0.013 wt% may be further included.

### Sulfur (S): 0.015 wt% or less

S is an element that causes hot shortness during hot rolling when existing in a solid solution state, so precipitation of MnS should be induced through the addition of Mn. Since more Mn should be additionally added to a level corresponding to the increase in S, it is not preferable that a large amount is present. Accordingly, the upper limit of S can be limited to 0.015 wt% or less. More specifically, 0.001 to 0.015 wt% may be further included. More specifically, 0.003 to 0.013 wt% may be further included.

### Nitrogen (N): 0.0060 wt% or less

N is an element whose residue in steel is inevitable, but N existing in a solid solution state causes aging and significantly reduces workability. In order to minimize the decrease in ductility due to the occurrence of unnecessary levels of aging, the upper limit can be limited to 0.006 wt% or less. More specifically, 0.0001 to 0.0060 wt% may be further included. More specifically, 0.0005 to 0.0055 wt% may be further included.

The balance other than the above-mentioned alloy composition includes Fe and unavoidable impurities. However, in an embodiment of the present invention, addition of other compositions is not excluded. The unavoidable impurities may be unintentionally mixed from raw materials or the surrounding environment in a typical steel manufacturing process, and this cannot be excluded. The unavoidable impurities can be understood by those skilled in the field of typical steel manufacturing. For example, Nb: 0.01 wt% or less, Ni: 0.1 wt% or less, Cr: 0.1 wt% or less, Cu: 0.1 wt% or less, Mo: 0.01 wt% or less and V: 0.01 wt% or less may be further included.

The base steel sheet 10 has an ASTM grain size number of 11.3 or more. The ASTM grain size number is an index having a correlation with the crystal grain size and is measured by calculating according to the ASTM E112 standard (Standard Test Methods for Determining Average Grain Size) from an image obtained through optical microstructure observation. The ASTM grain size number can be measured for a cross-section including the thickness direction of the base steel sheet 10. More specifically, it can be measured based on a TD plane.

A larger ASTM grain size number means that the average crystal grain size is smaller. When the ASTM grain size number is small, a problem that forming becomes difficult because strength excessively increases and elongation decreases may occur. More specifically, the ASTM grain size number is 11.3 to 13.0. More specifically, it is 11.3 to 12.0.

Returning to the description of the Ni plated steel sheet 100 for cans, the Fe-Ni alloy layer 20 is located between the base steel sheet 10 and the Ni plating layer 30. If only the Ni plating layer 30 exists without the Fe-Ni alloy layer 20, the adhesion with the base steel sheet 10 is not excellent, and thus it may easily fall off during processing. The Fe-Ni alloy layer 20 is formed through Ni diffusion into the base steel sheet 10 and Fe diffusion into the Ni plating layer 30. In an embodiment of the present invention, the Fe-Ni alloy layer 20 means a region between a point where Fe becomes 5 wt% and a point where Ni becomes 5% in the thickness direction. The thickness of the Fe-Ni alloy layer 20 may be the distance between the above-mentioned points. The thickness of the Fe-Ni alloy layer 20 can be measured through GDS (Glow Discharge Spectrometer) or EDS (Energy Dispersive X-ray Spectrometer) measurement of the cross-section of the Ni plated steel sheet 100 for cans. In the Fe-Ni alloy layer 20, an Fe and Ni concentration gradient exists, and Fe may have a concentration gradient in which the concentration increases from the outside to the inside of the steel sheet, and Ni may have a concentration gradient in which the concentration decreases from the outside to the inside of the steel sheet. The Fe-Ni alloy layer 20 may include 35 to 65 wt% of Fe and 35 to 65 wt% of Ni as an average in the thickness direction.

The thickness of the Fe-Ni alloy layer 20 may be 0.5 to 2.5 µm. If the thickness of the Fe-Ni alloy layer 20 is too thin, it is difficult to secure adhesion. If the thickness of the Fe-Ni alloy layer 20 is too thick, the Fe component present in the base steel sheet 10 is exposed to the surface, and corrosion resistance may be inferior. More specifically, the thickness of the Fe-Ni alloy layer 20 may be 0.7 to 2.3 µm. More specifically, the thickness of the Fe-Ni alloy layer 20 may be 1.0 to 2.0 µm. In an embodiment of the present invention, the thicknesses of the Fe-Ni alloy layer 20 and the Ni plating layer 30 are thicknesses for one side of the steel sheet. When the Fe-Ni alloy layer 20 and the Ni plating layer 30 are present on both surfaces, at least one of both surfaces may satisfy the above-described thickness.

The Ni plating layer 30 helps to ensure corrosion resistance to a battery electrolyte and the atmosphere. The plating thickness may vary depending on the amount of forming and the type of electrolyte, and at least one surface where wear mainly occurs during forming may be plated to a thickness of 2.0 µm or more. In the case of hot-dip plating, it is difficult to control the plating thickness to a certain level or less and there is a tendency that the thickness variation is large, so plating can be performed through electroplating.

The Ni plated steel sheet 100 for cans according to an embodiment of the present invention can secure excellent strength, elongation, and in-plane anisotropy at the same time. Specifically, the tensile strength is 420.0 MPa or more. More specifically, the tensile strength may be 420.0 to 600.0 MPa. More specifically, the tensile strength may be 425.0 to 550.0 MPa. More specifically, the tensile strength may be 430.0 to 500.0 MPa.

Specifically, the elongation is 20.0 % or more. More specifically, the elongation may be 20.0 % to 30.0 %. More specifically, the elongation may be 20.5 to 28.0 %. More specifically, the elongation may be 21.0 to 25.0 %.

Specifically, the in-plane anisotropy Δr is 0.40 or less. More specifically, the in-plane anisotropy Δr may be 0.01 to 0.40. More specifically, the in-plane anisotropy Δr may be 0.10 to 0.35.

The tensile strength, elongation, and in-plane anisotropy Δr can be measured through a common tensile test at room temperature. The in-plane anisotropy can be obtained through the following Expression 1. $Δ r = \left({r}_{0}+{r}_{90}-2\times {r}_{45}\right) / 2$ (Expression 1)

(However, r₀, r₄₅, and r₉₀ are plastic anisotropy coefficients (Lankford values) when tensile tested in directions forming angles of 0°, 45°, and 90° with the rolling direction, respectively.)

A method for manufacturing a Ni plated steel sheet for cans according to an embodiment of the present invention comprises the steps of: manufacturing a hot-rolled steel sheet by hot-rolling a slab; manufacturing a cold-rolled steel sheet by cold-rolling the hot-rolled steel sheet; recrystallization annealing the cold-rolled steel sheet; temper rolling the recrystallization-annealed steel sheet; manufacturing a Ni plated steel sheet by performing Ni plating on one or both surfaces of the temper-rolled steel sheet; and alloying-annealing the Ni plated steel sheet.

Hereinafter, each step will be described in detail.

First, a hot-rolled steel sheet is manufactured by hot-rolling a slab.

Since the alloy composition of the slab has been described in the base steel sheet 10 of the Ni plated steel sheet for cans described above, overlapping descriptions are omitted. Since the alloy components do not substantially change in the manufacturing process of the Ni plated steel sheet for cans, the alloy composition of the slab and the alloy composition of the base steel sheet 10 are substantially the same.

Before the manufacturing of the hot-rolled steel sheet, a step of heating the slab at 1200°C or higher may be further included. Since various precipitates generated in steel during slab manufacturing must be re-dissolved, a temperature of 1200°C or higher is required. More specifically, heating may be performed to 1200 to 1350°C.

The reheated slab may be hot finish rolled at a temperature of Ar₃ or higher and then coiled at 580 to 720°C to manufacture a hot-rolled steel sheet. The reason for limiting the hot rolling finish temperature to Ar₃ or higher is to perform rolling in an austenite single-phase region. When dual-phase rolling is performed, rolling stability may decrease due to non-uniform material properties. The Ar₃ temperature is widely known, and in an embodiment of the present invention, the Ar₃ temperature can be calculated by 910 - (310 × [C]) - (80 × [Mn] ) - (0.35 × (25.4 - 8)). More specifically, the hot rolling finish temperature may be 850°C to 1000°C.

When coiling after finish rolling, the precipitation behavior of TiC changes depending on the coiling temperature, and if it is too low or high, TiC is not properly precipitated, so the coiling temperature can be controlled to 580 to 720°C, which is easy for precipitation. The thickness of the hot-rolled steel sheet may be 2 to 6 mm.

Next, a cold-rolled steel sheet is manufactured by cold-rolling the hot-rolled steel sheet. An appropriate level of cold reduction ratio is important for both strength and workability. The higher the reduction ratio, the more smoothly recrystallization nucleation occurs during annealing, and the crystal grains are refined to increase the strength. Further, as the reduction ratio is higher, the in-plane anisotropy tends to decrease. However, if it is too high, it adversely affects workability by decreasing elongation, and productivity decreases by increasing deformation resistance. In consideration of this, the cold reduction ratio is set in the range of 70 to 90%. More specifically, the reduction ratio may be 73 to 85%. Before cold rolling, a pickling process may be added to remove scale generated during hot rolling. The thickness of the cold-rolled steel sheet may be 0.3 to 1 mm.

Next, the cold-rolled steel sheet is recrystallization-annealed. The main purpose of the recrystallization annealing is to remove internal stress formed during cold rolling and ensure workability. For this purpose, a process of annealing at a temperature high enough for recrystallization to occur completely is necessary. In order to cause recrystallization for the cold-rolled steel sheet having the steel component system according to an embodiment of the present invention, a temperature of 720°C or higher is required in consideration of the increase in recrystallization temperature due to TiC. If the temperature is too low, recrystallization is not completely finished and some deformed grains remain, so that significant decrease in ductility and an increase in strength of the steel sheet may cause cracks during forming. However, if the annealing temperature is too high, it is difficult to secure strength due to grain growth, and breakage or shape failure may be caused due to a decrease in strength during annealing. Accordingly, the cold-rolled steel sheet may be recrystallization-annealed at a soaking temperature of 720 to 850°C. More specifically, annealing may be performed at a temperature of 725 to 835°C. The soaking time may be 10 to 120 seconds.

Next, the recrystallization-annealed steel sheet is temper-rolled.

Temper rolling serves not only to correct the shape but also to form dislocations of appropriate density. Dislocations formed during the temper rolling process become positions where carbides are likely to precipitate in the alloying-annealing process carried out after plating, thereby contributing to additional strength improvement. In order to obtain such an effect, a reduction ratio of 0.5% or more is required. However, if the reduction ratio is too high, it provides a driving force for surface crystal grains to recrystallize and coarsen in the alloying-annealing process, and locally coarse crystal grains cause poor workability such as local fracture due to non-uniform elongation, so it is necessary to perform at a level of 1.8% or less. More specifically, the reduction ratio may be 0.6 to 1.7%.

Next, a Ni plated steel sheet is manufactured by Ni plating one or both surfaces of the temper-rolled steel sheet. Ni plating is required to ensure corrosion resistance to battery electrolytes and the atmosphere. The plating thickness may vary depending on the amount of forming and the type of electrolyte, and at least one surface where wear mainly occurs during forming may be plated to a thickness of 2.0 µm or more. More specifically, it may be plated to a thickness of 2.0 to 5.0 µm. In the case of hot-dip plating, it is difficult to control the plating thickness below a certain level and there is a tendency that thickness variation is large, so electroplating can be used. Conditions such as a Ni plating bath and current density during electroplating may use common conditions, and specific descriptions thereof are omitted.

Next, the Ni plated steel sheet is alloying-annealed.

The Ni plating layer 30 has poor adhesion to the steel sheet immediately after plating and thus may easily fall off during processing. In order to prevent this, it is necessary to perform alloying-annealing at a high temperature to form the Fe-Ni alloy layer 20 between the Ni plating layer and the steel sheet by diffusion.

At this time, it is maintained at a soaking temperature of 600 to 740°C for 5 to 60 seconds. When the alloying-annealing temperature is low or the time is too short, it is difficult to ensure adhesion because the Fe-Ni alloy layer is thin. When the annealing temperature is too high or the time is too long, the alloy layer is thick and the Fe component contained in the steel sheet is exposed to the surface of the plating layer, making it difficult to ensure corrosion resistance. However, the correlation between the alloying-annealing temperature and time and the thickness of the alloy layer is limited to the steel sheet manufactured by the components and manufacturing conditions described in the present invention, and may not hold for steel sheets having different components and manufacturing processes. More specifically, it can be maintained at a soaking temperature of 610 to 730°C for 7 to 58 seconds.

In order to correct the shape of the steel sheet after the alloying-annealing, cold rolling may be additionally performed within a range of 2.0% or less.

Hereinafter, the present invention will be described in more detail through examples. However, these examples are only for illustrating the present invention, and the present invention is not limited thereto.

### Example 1

Steel sheets having the compositions of Table 1 below and the manufacturing conditions of Table 2 were manufactured. The components are measured values, and each slab having the corresponding components was manufactured. The slab was reheated to 1220°C and hot-rolled to the same thickness of 4 mm at 900°C or higher and then coiled at 640°C to manufacture a hot-rolled steel sheet. The coiled hot-rolled steel sheet was cold-rolled at the cold reduction ratio of Table 2, recrystallization-annealed for 30 seconds at the temperature of Table 2, and temper-rolled at the temper reduction ratio of Table 2 to manufacture a recrystallization-annealed steel sheet. After performing Ni electroplating on the recrystallization-annealed steel sheet to the same thickness of 3.0 µm, alloying-annealing was performed for 20 seconds at the temperature and time of Table 2 to manufacture a final Ni plated steel sheet.

For each of the manufactured steel sheets, the ASTM grain size number, tensile strength, elongation, in-plane anisotropy, and thickness of the alloy layer were measured, and the results are shown in Table 3.

The ASTM grain size number was calculated and measured according to the ASTM E112 standard (Standard Test Methods for Determining Average Grain Size) from an image obtained through optical microstructure observation.

The tensile strength, elongation, and in-plane anisotropy Δr were measured through a common tensile test at room temperature. The in-plane anisotropy can be obtained through the following Expression 1. $Δ r = \left({r}_{0}+{r}_{90}-2\times {r}_{45}\right) / 2$ (Expression 1)

(However, r0, r45, and r90 are plastic anisotropy coefficients (Lankford values) when tensile tested in directions forming angles of 0°, 45°, and 90° with the rolling direction, respectively.)

The thickness of the alloy layer was measured through GDS (Glow Discharge Spectrometer) measurement of the cross-section of the plated steel sheet. The distance from the point of 5 wt% Fe to the point of 5 wt% Ni was measured.

Adhesion of the plating layer was judged to be good if there was no portion where the plating layer was peeled from the steel sheet when the material was elongated by 20%, and corrosion resistance was judged to be good if surface discoloration did not occur when immersed in pure water for 20 minutes after forming and dried.

**[Table 1]**

| (wt%) | C | Si | Mn | Al | P | S | N | Ti |
|---|---|---|---|---|---|---|---|---|
| Example 1 | 0.044 | 0.016 | 0.19 | 0.033 | 0.007 | 0.006 | 0.0028 | 0.042 |
| Example 2 | 0.061 | 0.014 | 0.20 | 0.035 | 0.007 | 0.006 | 0.0031 | 0.040 |
| Example 3 | 0.049 | 0.014 | 0.21 | 0.032 | 0.007 | 0.006 | 0.0028 | 0.024 |
| Example 4 | 0.051 | 0.014 | 0.18 | 0.035 | 0.006 | 0.006 | 0.0029 | 0.055 |
| Example 5 | 0.048 | 0.014 | 0.22 | 0.035 | 0.007 | 0.006 | 0.0029 | 0.041 |
| Example 6 | 0.050 | 0.015 | 0.19 | 0.036 | 0.007 | 0.006 | 0.0031 | 0.039 |
| Example 7 | 0.048 | 0.014 | 0.21 | 0.034 | 0.007 | 0.006 | 0.0033 | 0.039 |
| Example 8 | 0.051 | 0.016 | 0.22 | 0.035 | 0.007 | 0.007 | 0.0028 | 0.036 |
| Example 9 | 0.049 | 0.014 | 0.21 | 0.033 | 0.007 | 0.006 | 0.0031 | 0.037 |
| Example 10 | 0.049 | 0.014 | 0.18 | 0.034 | 0.007 | 0.006 | 0.0031 | 0.037 |
| Example 11 | 0.050 | 0.014 | 0.22 | 0.036 | 0.008 | 0.006 | 0.0029 | 0.040 |
| Example 12 | 0.051 | 0.015 | 0.19 | 0.037 | 0.006 | 0.007 | 0.0027 | 0.037 |
| Example 13 | 0.048 | 0.014 | 0.21 | 0.033 | 0.007 | 0.006 | 0.0027 | 0.042 |
| Example 14 | 0.050 | 0.014 | 0.19 | 0.037 | 0.007 | 0.006 | 0.0030 | 0.041 |
| Comparative Example 1 | 0.015 | 0.016 | 0.19 | 0.034 | 0.007 | 0.005 | 0.0032 | 0.040 |
| Comparative Example 2 | 0.073 | 0.015 | 0.22 | 0.034 | 0.008 | 0.006 | 0.0032 | 0.038 |
| Comparative Example 3 | 0.049 | 0.015 | 0.20 | 0.037 | 0.007 | 0.006 | 0.0031 | 0.018 |
| Comparative Example 4 | 0.050 | 0.016 | 0.22 | 0.032 | 0.007 | 0.006 | 0.0028 | 0.068 |
| Comparative Example 5 | 0.052 | 0.016 | 0.20 | 0.037 | 0.008 | 0.006 | 0.0030 | 0.040 |
| Comparative Example 6 | 0.049 | 0.014 | 0.21 | 0.034 | 0.007 | 0.006 | 0.0028 | 0.040 |
| Comparative Example 7 | 0.051 | 0.015 | 0.19 | 0.034 | 0.008 | 0.006 | 0.0027 | 0.041 |
| Comparative Example 8 | 0.049 | 0.015 | 0.18 | 0.033 | 0.007 | 0.006 | 0.0028 | 0.041 |
| Comparative Example 9 | 0.051 | 0.016 | 0.18 | 0.036 | 0.008 | 0.006 | 0.0032 | 0.044 |
| Comparative Example 10 | 0.050 | 0.015 | 0.20 | 0.035 | 0.007 | 0.006 | 0.0029 | 0.043 |
| Comparative Example 11 | 0.050 | 0.014 | 0.21 | 0.035 | 0.007 | 0.006 | 0.0029 | 0.043 |
| Comparative Example 12 | 0.049 | 0.016 | 0.19 | 0.035 | 0.008 | 0.006 | 0.0028 | 0.037 |
| Comparative Example 13 | 0.049 | 0.014 | 0.21 | 0.035 | 0.007 | 0.006 | 0.0030 | 0.044 |
| Comparative Example 14 | 0.051 | 0.015 | 0.19 | 0.034 | 0.007 | 0.006 | 0.0030 | 0.038 |

**[Table 2]**

| | Cold reduction ratio(%) | Recrystallization annealing temperature(°C) | Temper reduction ratio(%) | Alloying-annealing temperature(°C) | Alloying-annealing time(sec) |
|---|---|---|---|---|---|
| Example 1 | 80 | 750 | 1.0 | 670 | 20 |
| Example 2 | 80 | 750 | 1.0 | 670 | 20 |
| Example 3 | 80 | 750 | 1.0 | 670 | 20 |
| Example 4 | 80 | 750 | 1.0 | 670 | 20 |
| Example 5 | 75 | 750 | 1.0 | 670 | 20 |
| Example 6 | 85 | 750 | 1.0 | 670 | 20 |
| Example 7 | 80 | 730 | 1.0 | 670 | 20 |
| Example 8 | 80 | 830 | 1.0 | 670 | 20 |
| Example 9 | 80 | 750 | 0.6 | 670 | 20 |
| Example 10 | 80 | 750 | 1.6 | 670 | 20 |
| Example 11 | 80 | 750 | 1.0 | 620 | 20 |
| Example 12 | 80 | 750 | 1.0 | 720 | 20 |
| Example 13 | 80 | 750 | 1.0 | 670 | 10 |
| Example 14 | 80 | 750 | 1.0 | 670 | 55 |
| Comparative Example 1 | 80 | 750 | 1.0 | 670 | 20 |
| Comparative Example 2 | 80 | 750 | 1.0 | 670 | 20 |
| Comparative Example 3 | 80 | 750 | 1.0 | 670 | 20 |
| Comparative Example 4 | 80 | 750 | 1.0 | 670 | 20 |
| Comparative Example 5 | 65 | 750 | 1.0 | 670 | 20 |
| Comparative Example 6 | 93 | 750 | 1.0 | 670 | 20 |
| Comparative Example 7 | 80 | 710 | 1.0 | 670 | 20 |
| Comparative Example 8 | 80 | 860 | 1.0 | 670 | 20 |
| Comparative Example 9 | 80 | 750 | 0.3 | 670 | 20 |
| Comparative Example 10 | 80 | 750 | 1.9 | 670 | 20 |
| Comparative Example 11 | 80 | 750 | 1.0 | 580 | 20 |
| Comparative Example 12 | 80 | 750 | 1.0 | 760 | 20 |
| Comparative Example 13 | 80 | 750 | 1.0 | 670 | 3 |
| Comparative Example 14 | 80 | 750 | 1.0 | 670 | 65 |

**[Table 3]**

| Classification | ASTM grain size number | Tensile strength(MPa) | Elongation( %) | In-plane anisotropy( Δ r) | Alloy layer thickness(µ m) | Adhesion | Corrosion resistance |
|---|---|---|---|---|---|---|---|
| Example 1 | 11.4 | 445.4 | 22.6 | 0.24 | 1.4 | Good | Good |
| Example 2 | 11.5 | 482.5 | 21.1 | 0.25 | 1.5 | Good | Good |
| Example 3 | 11.4 | 442.4 | 23.1 | 0.25 | 1.5 | Good | Good |
| Example 4 | 11.4 | 464.6 | 22.6 | 0.25 | 1.4 | Good | Good |
| Example 5 | 11.4 | 425.6 | 23.6 | 0.28 | 1.5 | Good | Good |
| Example 6 | 11.5 | 466.1 | 22.1 | 0.16 | 1.5 | Good | Good |
| Example 7 | 11.4 | 470.6 | 21.4 | 0.25 | 1.6 | Good | Good |
| Example 8 | 11.6 | 466.7 | 23.6 | 0.25 | 1.5 | Good | Good |
| Example 9 | 11.3 | 440.5 | 22.1 | 0.25 | 1.4 | Good | Good |
| Example 10 | 11.7 | 470.6 | 22.6 | 0.24 | 1.5 | Good | Good |
| Example 11 | 11.6 | 470.1 | 21.9 | 0.23 | 1.2 | Good | Good |
| Example 12 | 11.3 | 461.0 | 22.2 | 0.25 | 1.9 | Good | Good |
| Example 13 | 11.6 | 470.7 | 22.2 | 0.26 | 0.9 | Good | Good |
| Example 14 | 11.6 | 463.8 | 22.2 | 0.25 | 2.0 | Good | Good |
| Comparative Example 1 | 11.2 | 386.5 | 23.1 | 0.20 | 1.6 | Good | Good |
| Comparative Example 2 | 11.6 | 500.6 | 19.3 | 0.28 | 1.6 | Good | Good |
| Comparative Example 3 | 10.8 | 416.2 | 24.6 | 0.26 | 1.6 | Good | Good |
| Comparative Example 4 | 11.7 | 499.4 | 18.3 | 0.21 | 1.4 | Good | Good |
| Comparative Example 5 | 11.0 | 402.1 | 25.6 | 0.48 | 1.6 | Good | Good |
| Comparative Example 6 | 11.7 | 480.6 | 19.5 | 0.20 | 1.4 | Good | Good |
| Comparative Example 7 | - | 577.4 | 10.6 | - | 1.5 | Good | Good |
| Comparative Example 8 | 11.2 | 410.0 | 25.0 | 0.20 | 1.5 | Good | Good |
| Comparative Example 9 | 11.5 | 395.4 | 21.4 | 0.25 | 1.5 | Good | Good |
| Comparative Example 10 | 11.6 | 499.4 | 19.5 | 0.25 | 1.5 | Good | Good |
| Comparative Example 11 | 11.5 | 467.3 | 22.0 | 0.25 | 0.4 | Poor | Good |
| Comparative Example 12 | 11.3 | 453.6 | 22.5 | 0.25 | 2.6 | Good | Poor |
| Comparative Example 13 | 11.5 | 473.5 | 22.1 | 0.25 | 0.3 | Poor | Good |
| Comparative Example 14 | 11.5 | 467.6 | 21.8 | 0.25 | 2.6 | Good | Poor |

As shown in Tables 1 to 3, Examples 1 to 14 satisfy all the steel components and manufacturing conditions, and it can be confirmed that tensile strength, elongation, and in-plane anisotropy are all excellent. Further, it can be confirmed that the thickness of the Fe-Ni alloy layer is appropriately formed, and thus adhesion and corrosion resistance are also excellent.

Comparative Example 1 is a case where the C content is low, and sufficient strength was not secured due to the small C content. Further, due to the low C content, crystal grains were formed to be large with an ASTM grain size number of 11.1 and had a low tensile strength. On the other hand, Comparative Example 2 is a case where the C content is exceeded, and crystal grains were formed to be small and sufficiently high tensile strength was obtained, but the elongation was low, so the workability was poor.

Comparative Example 3 is a case where the Ti content is low, and the Ti content is insufficient to form a sufficient amount of TiC. Due to this, crystal grains were formed to be large and the tensile strength was low. Comparative Example 4 is a case where the Ti content is high, and the crystal grain size was formed to be small and the tensile strength was excellent, but the elongation was formed to be low.

In Comparative Example 5, the cold reduction ratio was low, so crystal grains were formed to be large and tensile strength was low. Further, the in-plane anisotropy Δr was significantly inferior. It can be seen that when the cold reduction ratio is excessively high as in Comparative Example 6, the elongation decreases, which also reduces the workability.

In Comparative Example 7, the recrystallization annealing temperature was low, so recrystallization did not occur properly. Accordingly, the elongation was low and the workability was very low. This seems to be because TiC was precipitated very finely. When the recrystallization annealing temperature was too high as in Comparative Example 8, problems occurred in that the crystal grains were large and the tensile strength was low. Further, when the recrystallization annealing temperature is high as in Comparative Example 8, the strength is low at high temperatures and the risk of breakage increases, so the line speed must be relatively reduced, resulting in a problem of reduced productivity.

In Comparative Example 9, the temper reduction ratio was very low, and thus the tensile strength was formed to be low. When the temper reduction ratio was excessively high as in Comparative Example 10, problems occurred in that the elongation was lowered and the surface crystal grains became coarse.

In Comparative Example 11, the alloying-annealing temperature was low, and in Comparative Example 13, the alloying-annealing time was short, so the Fe-Ni alloy layer thickness was formed to be thin in both cases. In both cases, the bonding strength between the steel sheet and the plating layer was low, so a problem occurred in that the plating layer was peeled off during battery can forming. In Comparative Example 12, the alloying-annealing temperature was high, and in Comparative Example 14, the alloying-annealing time was long, so the Fe-Ni alloy layer thickness was formed to be thick in both cases. As a result, Fe was exposed to the surface, and there was a problem that rust easily occurred after washing with water and drying.

The present invention is not limited to the embodiments but can be manufactured in various different forms, and those of ordinary skill in the art to which the present invention belongs will be able to understand that the present invention can be implemented in other specific forms without changing the technical spirit or essential features of the present invention. Therefore, it should be understood that the embodiments described above are illustrative in all respects and not restrictive.

### [Description of symbols]

100: Ni plated steel sheet
10: Base steel sheet
20: Fe-Ni alloy layer
30: Ni plating layer

## Claims

1. A Ni plated steel sheet for cans, comprising a base steel sheet, a Ni plating layer located on one or both surfaces of the base steel sheet, and an Fe-Ni alloy layer located between the base steel sheet and the Ni plating layer,
wherein the base steel sheet comprises, in wt%, C: 0.02 to 0.07%, Mn: 0.1 to 0.4%, Al: 0.01 to 0.06%, and Ti: 0.02 to 0.06%, and the balance of Fe and other unavoidable impurities,
wherein an ASTM grain size number is 11.3 or more,
wherein tensile strength is 420 MPa or more,
wherein elongation is 20% or more,
wherein in-plane anisotropy Δr is 0.4 or less, and
wherein a thickness of the Fe-Ni alloy layer is 0.5 to 2.5 µm.

2. The Ni plated steel sheet for cans of claim 1,
wherein the base steel sheet further comprises at least one of Si: 0.05 wt% or less, P: 0.015 wt% or less, S: 0.015 wt% or less, and N: 0.006 wt% or less.

3. The Ni plated steel sheet for cans of claim 1,
wherein the base steel sheet further comprises at least one of Nb: 0.01 wt% or less, Ni: 0.1 wt% or less, Cr: 0.1 wt% or less, Cu: 0.1 wt% or less, Mo: 0.01 wt% or less and V: 0.01 wt% or less.

4. The Ni plated steel sheet for cans of claim 1,
wherein the base steel sheet comprises TiC precipitates, and an average particle diameter of the TiC precipitates is 1 nm or more and 1 µm or less.

5. A method of manufacturing a Ni plated steel sheet for cans, comprising the steps of:
manufacturing a hot-rolled steel sheet by hot-rolling a slab comprising, in wt%, C: 0.02 to 0.07%, Mn: 0.1 to 0.4%, Al: 0.01 to 0.06%, and Ti: 0.02 to 0.06%, and the balance of Fe and other unavoidable impurities;
manufacturing a cold-rolled steel sheet by cold-rolling the hot-rolled steel sheet at a reduction ratio of 70 to 90%;
recrystallization annealing the cold-rolled steel sheet at a soaking temperature of 720 to 850°C;
temper rolling the recrystallization-annealed steel sheet at a reduction ratio of 0.5 to 1.8%;
manufacturing a Ni plated steel sheet by performing Ni plating on one or both surfaces of the temper-rolled steel sheet; and
alloying-annealing by maintaining the Ni plated steel sheet at a soaking temperature of 600 to 740°C for 5 to 60 seconds.

6. The method of manufacturing the Ni plated steel sheet for cans of claim 5,
wherein the slab further comprises at least one of Si: 0.05 wt% or less, P: 0.015 wt% or less, S: 0.015 wt% or less, and N: 0.006 wt% or less.

7. The method of manufacturing the Ni plated steel sheet for cans of claim 5,
wherein the slab further comprises at least one of Nb: 0.01 wt% or less, Ni: 0.1 wt% or less, Cr: 0.1 wt% or less, Cu: 0.1 wt% or less, Mo: 0.01 wt% or less and V: 0.01 wt% or less.

8. The method of manufacturing the Ni plated steel sheet for cans of claim 5,
further comprising heating the slab at 1200°C or higher, before the manufacturing of the hot-rolled steel sheet.

9. The method of manufacturing the Ni plated steel sheet for cans of claim 5,
wherein in the manufacturing of the hot-rolled steel sheet, after hot finish rolling at Ar₃ or higher, coiling is performed at a temperature of 580 to 720°C.
